# EUROPÄISCHE PATENTSCHRIFT

(11) **EP 1 395 772 B1**
(45) Veröffentlichungstag und Bekanntmachung des Hinweises auf die Patenterteilung: **03.05.2006**
(21) Anmeldenummer: 03706263.5
(22) Anmeldetag: 30.01.2003
(51) Int. Cl.: F16L 37/12, F01N 7/18

(54) **U-PROFILFÖRMIGE FEDERKLAMMER FÜR FLANSCHVERBINDUNGEN**
SPRING CLIP WITH A U-SHAPED PROFILE FOR FLANGE CONNECTIONS
ETRIER DE RESSORT PROFILE EN U CON U POUR DES RACCORDEMENTS PAR BRIDES

(30) Priorität: 02.02.2002 DE 10204262
(43) Veröffentlichungstag der Anmeldung: 10.03.2004
(73) Patentinhaber: Christian Bauer GmbH & Co., 73642 Welzheim (DE)
(72) Erfinder: BRÜCKNER, Lothar, 71229 Leonberg (DE)
(74) Vertreter: Patentanwalts-Partnerschaft Rotermund + Pfusch + Bernhard
(86) Internationale Anmeldenummer: PCT/DE2003/000248
(87) Internationale Veröffentlichungsnummer: WO 2003/067139

(56) Entgegenhaltungen:
- EP-A- 0 344 162
- DE-A- 19 964 221
- DE-C- 10 015 028
- DE-C- 19 911 724
- NL-A- 8 202 117
- US-A- 2 240 078

## Beschreibung

Die Erfindung betrifft eine Flanschverbindung von Abgasrohren von Kraftfahrzeugen, umfassend eine U-förmige, einstückige Federklammer aus gebogenem Stahl nach dem Oberbegriff des Patentanspruchs.

Eine solche Flanschverbindung ist aus DE 199 64 221 A1 bekannt. Im Bereich des Rückens der U-förmigen Federklammer sind jeweils ausgehend von einem oberen geschlossenen Bereich seitlich in die beiden U-Profilschenkel jeweils eingreifende Ausnehmungen vorgesehen. Der in Längsrichtung der U-förmigen Federklammer verbleibende geschlossene Federrückenbereich zwischen den sich jeweils zu den U-Profil-Schenkeln hin verlaufenden geschlossenen Ausnehmungen beeinträchtigt eine voneinander unabhängige Spannwirkung der sich jeweils von den beiden U-Profil-Schenkeln gegenüberliegenden einzelnen Stegen in Längsrichtung der durch die Flanschverbindung miteinander verbundenen Rohre.

Flanschverbindungen mit einem insgesamt geschlossenen Federrückenbereich sind aus WO 99/02912 A1 bekannt.

Bei einer Flanschverbindung mit einer Federklammer nach DE 100 15 028 C1 wird im Federrückenbereich eine Materialverringerung erreicht, indem eine der beiden ersten Ausnehmungen in den U-Profil-Schenkeln sich in den gesamten Federrückenbereich hinein erstreckt. Durch die sich direkt von einem der U-Profil-Schenkel ausgehende, sich über den gesamten Federrückenbereich erstreckende erste Ausnehmung wird die Spannwirkung der beiden einzelnen Stege dieses betreffenden U-Profil-Schenkels in Richtung senkrecht zu der Flanschverbindungsachse geschwächt.

Die Erfindung beschäftigt sich mit dem Problem, eine gattungsgemäße, durch eine Federklammer zu bewirkende Flanschverbindung möglichst einfach herstellen und gleichzeitig bei einem möglichst geringen Gewicht eine möglichst gute Federwirkung erreichen zu können.

Gelöst wird diese Aufgabe durch eine gattungsgemäße Flanschverbindung mit einer Federklammer nach dem Merkmal des Patentanspruchs.

Die erfindungsgemäß umfangsmäßig geschlossene Ausnehmung im gebogenen Rückenbereich der Federklammer weist gegenüber den nach DE 100 15 028 C1 bis in den Federrückenbereich hineinragenden zu den Federschenkelenden offen auslaufenden, gattungsgemäßen ersten Ausnehmungen folgende Vorteile auf:
- Gewichtsreduzierung der Federklammer
- Erleichterung beim Biegen der Federklammer durch
   1.) reduziertes Material im gebogenen Bereich der Federklammer zur verringerung der Biegekräfte,
   2.) der Rückenbereich der Federklammer der zwischen den U-Schenkeln liegt, kann durch einen ausreichend groß auslegbaren Materialbereich biegegünstig gestaltet werden. Biegegünstig bedeutet hier, dass ein werkzeugschonender Biegeprozess erfolgen kann im Gegensatz zu einem Pressprozess, den ein nicht ausreichend groß auslegbarer Materialbereich zwangsläufig verursacht,
      - der gebogene Federklammerbereich mit Ausnehmung wird hinsichtlich Steifigkeit weicher, so dass eine weichere Federkennlinie der Klammer erreicht wird; die Belastungsspitzen in den Schenkeln nahe der Biegung werden reduziert,
      - der Durchbruch verbessert die Wärmeabfuhr einer in einer Abgasanlage eingesetzten Federklammer, indem der Fahrtwind die Federklammer besser und gleichmäßiger (Windschatteneffekte) durchsetzen kann.

Ein vorteilhaftes Ausführungsbeispiel der Erfindung ist in der Zeichnung dargestellt.

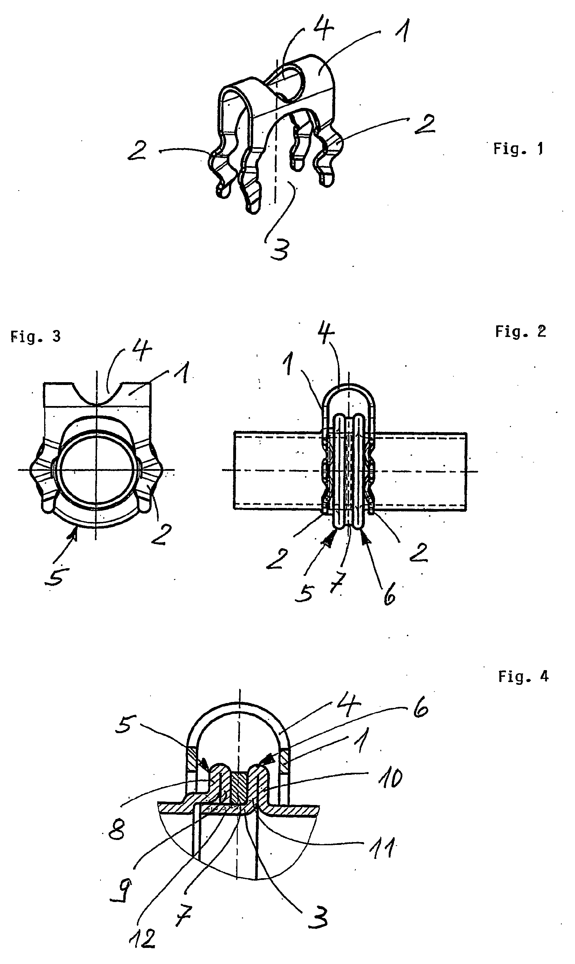

In dieser zeigen
- Fig. 1: eine perspektivische Ansicht einer aufsteckbaren Federklammer für Flanschverbindungen,
- Fig. 2: die Federklammer in zur Erzielung einer Flanschverbindung montiertem Zustand in einer ersten Ansicht,
- Fig. 3: eine Seitenansicht zu der Flanschverbindung in Fig. 2,
- Fig. 4: einen vergrößerten Ausschnitt aus der Flanschverbindung in Fig. 2.

Die Federklammer besitzt einen gebogenen Federrücken 1 und gegenüberliegende, sich an den Bereich des Federrückens 1 anschließende Schenkel 2, von denen jeweils ein Paar sich mit Bezug auf eine durch den Federrücken 1 verlaufende Längsebene gegenüberliegt. Die Schenkel 2 begrenzen in der Ebene dieser Schenkel je Paar jeweils die ersten Ausnehmungen 3. Das Material der Federklammer ist gebogenes Federstahlblech, so dass die Schenkel 2 als Federarme bzw. Federzungen wirken. In dem Federrücken 1 ist zur Materialersparnis, leichteren Herstellbarkeit der Federklammer sowie einer verbesserten Federwirkung der Federklammer eine den Zenit des Federrückens 1 erfassende, umfangsmäßig geschlossene zweite Ausnehmung 4 in der Form einer Durchgangsöffnung vorgesehen.

Bei einer montierten Flanschverbindung ist die Federklammer auf die aneinander liegenden Flansche aufgesteckt, wobei die Schenkel 2 die gegeneinander liegenden Flansche, nämlich einen ersten Flansch 5 und einen zweiten Flansch 6 axial gegeneinander über einen dazwischen liegenden Dichtring 7 fest verspannen. Der erste Flansch 5 ist als ein gebördelter Flansch ausgebildet, bei dem auf einen nach radial außen rechtwinklig abgebogenen ersten Flanschbereich 8 ein als Gegenfläche gegenüber dem zweiten Flansch 6 dienender zweiter Flanschbereich 9 um 180° zurückgebogen ist. Der zurückgebogene zweite Flanschbereich 9 besitzt radial innen gegenüber dem Fußbereich des ersten Flanschbereiches 8 einen Rücksprung.

Bei dem zweiten Flansch 6 ist ebenfalls ein erster Flanschbereich 10 rechtwinklig nach radial außen gebogen, von dem auf der dem ersten Flansch 5 zugewandten Seite eine radiale Rückbiegung um 180° als zweiter Flanschbereich 11 ausgeht, wobei der Endbereich nochmals um 90° zu einem dritten Flanschbereich 12 umgebogen ist. Der dritte Flanschbereich 12 des zweiten Flansches 6 besitzt einen zu dem Rohr, aus dem der zweite Flansch 6 geformt ist, zentrischen Außenumfang. Dabei ist der Durchmesser dieses Außenumfanges derart gewählt, dass durch axiales Einschieben in den zweiten Flanschbereich 9 des ersten Flansches 5 eine radiale Zentrierung gegeben ist. Der zwischen dem ersten und zweiten Flansch 5 bzw. 6 eingespannte Dichtring 7 ist radial auf dem dritten Flanschbereich 12 des zweiten Flansches 6 zentriert.

## Patentansprüche

1. Flanschverbindung, insbesondere Flanschverbindung von Abgasrohren von Kraftfahrzeugen, umfassend eine U-förmige, einstückige Federklammer aus gebogenem Federstahl mit aus einem Bereich des Federrückens (1) offen zu den Enden der beiden U-Profil-Schenkel (2) auslaufenden, die U-Profil-Schenkel (2) jeweils vollständig durchdringenden, ersten Ausnehmungen (3) zur Aufnahme der mit den Flanschen verbundenen Rohre, wobei die beiden U-Profil-Schenkel (2) ausschließlich über den Federrücken (1) miteinander verbunden sind und dieser Federrücken (1) mindestens eine, umfangsmäßig geschlossene zweite Ausnehmung (4) aufweist,
**dadurch gekennzeichnet,**
**dass** die mindestens eine zweite Ausnehmung (4) innerhalb des Federrückens (1) einen Bereich erfasst, der sich zu beiden Seiten einer zwischen den U-Profil-Schenkeln (2) verlaufenden Längsebene über den gesamten, zwischen den U-Profil-Schenkeln (2) liegenden, außerhalb dieser mindestens einen zweiten Ausnehmung (4) geschlossen ausgebildeten Federrücken (1) erstreckt.

## Revendications

1. Assemblage par brides, en particulier assemblage par brides de tubulures d'échappement de véhicules, comportant une pince élastique d'une seule pièce en forme de U, en acier élastique cintré, comprenant des premiers évidements se terminant de manière ouverte en formant les extrémités des deux ailes de profilé en U (2) à partir d'une zone de dos élastique (1), traversant chacun totalement les ailes de profilé en U (2), pour recevoir les tubes reliés par les brides, dans lequel les deux ailes de profilé en U (2) sont reliées exclusivement l'une à l'autre par l'intermédiaire du dos élastique (1) et ce dos élastique (1) comporte au moins un second évidement (4) fermé sur son pourtour,
**caractérisé en ce que** le au moins un second évidement (4) à l'intérieur du dos élastique (1) comprend une zone qui s'étend sur les deux côtés d'un plan longitudinal passant entre les deux ailes de profilé en U (2) sur l'ensemble du dos élastique (1) réalisé fermé, situé entre les deux ailes de profilé en U (2), à l'extérieur de ce au moins un second évidement (4).

## Claims

1. A flange connection, in particular a flange connection of exhaust gas pipes of motor vehicles, comprising a one-piece U-shaped spring clip made of bent spring steel in particular, with first recesses (3) that extend openly from a region of the spring-loaded back (1) to the ends of the two U-profile legs (2) and completely pass through each of the U-profile legs (2), for receiving the pipes that are connected to the flanges, whereby the two U-profile legs (2) are interconnected only via the spring-loaded back (1), said spring-loaded back (1) having at least one second recess (4) that is closed at the periphery,
**characterized in that** at least one second recess (4) includes within the spring-loaded back (1) an area that extends over the entire spring-loaded back (1) which is between the U-profile legs (2) and is designed to be closed outside of this at least one second recess (4), said area extending on both sides of a longitudinal plane running between the U-profile legs (2).
